# EUROPEAN PATENT SPECIFICATION

(11) **EP 1 533 432 B1**
(45) Date of publication and mention of the grant of the patent: **27.07.2011**
(21) Application number: 04078098.3
(22) Date of filing: 10.11.2004
(51) Int. Cl.: E04B 7/20, B32B 3/08, B32B 3/14

(54) **Composite plate-shaped element**
Plattenförmige Verbundbauteile
Eléments composites en forme de plaque

(30) Priority: 14.11.2003 NL 1024790
(43) Date of publication of application: 25.05.2005
(73) Proprietor: OPSTALAN B.V., 5061 KD Oisterwijk (NL)
(72) Inventor: Passlack, Wolfgang, 5237 RG s'Hertogenbosch (NL)
(74) Representative: Valkonet, Rutger

(56) References cited:
- EP-A- 0 123 710
- EP-A- 0 450 731
- EP-A- 0 796 960
- DE-A- 2 912 046
- DE-A- 10 120 810

## Description

The present invention relates to a composite plate-shaped element comprising a rigid base layer and a layer of insulation material present thereon wherein a vapour-inhibiting layer is present between the rigid base layer and the layer of insulation material, the base layer being provided with one or more structural ribs on the side remote from the layer of insulation material, wherein the structural ribs extend in the longitudinal direction of the composite plate-shaped element. The present invention furthermore relates to the use of such a composite plate-shaped element, as well as to a method for placing such a composite plate-shaped element on a flat or a sloping roof.

German Offenlegungsschrift 10 120 810 relates to a roof having heat insulation plates fixed to rafters and joined to each other by tongue and groove connections, wherein the plates on their outsides and insides are formed with plastic foam layers. The foam layers on the inside have recesses on their upper and lower edges and running horizontally over the plate width in which is fitted a stiffening strip with a length corresponding to the plate width for producing a forced locking between the plates.

European patent application 0 123 710 relates to an insulating raftered member cover support, comprising a rigid underside on which is glued an insulating material, wherein the rigid underside is composed of a compressed, cellulose fiber reinforced plaster board.

European patent application 0 796 960 relates to an assembly for forming a roof, which assembly comprises at least two spaced-apart girders extending parallel to each other as well as roof elements being supported on said girders, whereby each roof element comprises two metal sheets extending parallel to each other, with a layer of hard foam plastic material, for example polystyrene, present therebetween.

German Offenlegungsschrift 29 12 046 relates to a panel type insulation element, comprising a hard foam panel material, a vapour inhibiting layer on top of the hard foam panel material, and on top of the vapour inhibiting layer is present a circuit of tubes for flowing a heat exchanger medium.

Elements for cladding or covering a latticework for walls and roofs of buildings are known per se from Dutch laid-open publication No. 9000797 filed in the name of the present application, which corresponds to European patent application EP 0 450 731. The element that is known therefrom, which is configured as a sandwich combination element, is provided with a rigid support structure in the form of structural ribs, with said sandwich combination element comprising an insulation layer present on a base layer. The structure of such an element successively comprises at least one package of layers, such as a layer of chipboard or triplex, a layer of synthetic foam material, a layer of mineral wool, which package of layers is provided between the structural ribs. From Dutch laid-open publication No. 8801468, filed in the name of the present applicant, there is also known a composite plate-shaped material for use as a constructional insulation material in buildings, which plate-shaped material comprises a layer of a mineral material, a layer of polyurethane foam material and a coating. Such plate-shaped materials are mainly used as insulation materials, which exhibit a reduced combustibility in comparison with the known materials. The need for such materials is great, especially for insulating steel roofs. From European patent application EP 0 123 710 there is known an insulation element consisting of a rigid bottom side, on which a layer of an insulation material, for example a foam, is glued, which insulation material supports transverse slats, said bottom side being composed of a compressed, moisture-resistant, cellulose fibre-reinforced plaster board.

The drawback of the insulation elements as discussed above is that the construction of traditional roofs involves a considerable amount of labour. In addition, the work must be done by professionally trained personnel. When a construction project is started, all the parts must be calculated for each project individually. Generally, the contractor or the foreman are not qualified for this work, and a specialist, for example a structural engineer, a building physicist or the like, must be called in. It will be apparent that calling in third parties has a cost-increasing effect.

Another drawback is the fact that the quality of the construction of the traditional roof depends to a certain extent on the expertise or professional knowledge of the contractor. Thus, considerable differences in quality may occur even within a specific project, which will have an adverse effect on, for example, the thermal insulation properties of the roof. In addition, the traditional roofs that are currently commercially available are not naturally suitable for integration of heat recovery by means of solar energy, as in many cases the roof needs to be adapted "afterwards" for this purpose, which may lead to leakage and/or decreased insulation properties. Moreover, such an integration of heat recovery requires an additional investment at the building site, so that in practice it is frequently decided not to provide such an environmentally friendly system. In addition to that, some insulation elements are constructed in such a manner that substantially complete destruction of the elements is required before the elements are suitable for such heat recovery. Furthermore, such an operation has a negative influence on the constructional and load-bearing qualities of such an element, so that the primary function of such an element is affected.

A first aspect of the present invention is to provide a composite plate-shaped element which makes it possible to realise a considerable saving in labour at the building site.

Another aspect of the present invention is to provide a composite plate-shaped element by means of which also a saving in labour as regards work preparation and engineering is realised.

Yet another aspect of the present invention is to provide a composite plate-shaped element which, on account of the industrial production methods that are used, exhibits a constant and reliable quality.

Another aspect of the present invention is to provide a composite plate shaped element in which provisions have been made to integrate energy recovery by means of solar energy, without this requiring adaptation or extension of the work to be carried out by the constructor of the element, and in which the aim is furthermore not to affect the appearance and the constructional properties of the composite plate-shaped element.

The composite plate-shaped element as referred to in the introduction is characterized in that a vapour-inhibiting layer is present between the rigid base layer and the layer of insulation material, the base layer being provided with one or more of structural ribs on the side remote from the layer of insulation material.

One or more of the above aspects are met by using such a composite plate-shaped element.

In a special embodiment, the structural ribs preferably extend in the longitudinal direction of the composite plate-shaped element, and the structural ribs can be placed on or against the wall by using auxiliary devices. According to another possibility, however, the structural ribs slip into a so-called beam shoe or they are supported on a supporting structure or on a wooden support member.

From a viewpoint of energy control integration it is desirable to provide one or more heat exchangers for solar energy in the layer of insulation material, which heat exchangers are provided with the required supply and discharge pipes, wherein the heat exchangers are flush-mounted in the layer of insulation material, in such a manner that a substantially flat upper surface formed by the layer of insulation material and the heat exchangers that are flush-mounted therein is obtained. By providing the heat exchangers in the insulation material of the present construction of the plate-shaped element, the structure of the base layer and the structural ribs remains intact, so that the constructional properties thereof are retained.

When such a construction for the composite plate-shaped element is used, a number of provisions have already been made at the factory for rendering the composite plate-shaped element suitable for integration of solar energy recovery without the appearance and the constructional properties of the element being adversely affected.

Other special embodiments are defined in the appended subclaims.

The present invention furthermore relates to the use of the composite plate-shaped element as described above in a building, for example a house.

The present invention furthermore relates to a special method for placing a composite plate-shaped element on a flat or a sloping roof, which method is characterized by the steps of:
i) providing a supporting structure, which structure comprises at least two spaced-apart load-bearing members, which load-bearing members are each provided with regularly spaced-apart recesses,
ii) providing a composite plate-shaped element as described above,
iii) placing said composite plate-shaped element on the load-bearing members, in such a manner that the structural ribs of the composite plate-shaped element each engage in a recess, as a result of which the composite plate-shaped element forms a covering between the two load-bearing members.

As already indicated before, it is also possible for the structural ribs to be supported on a supporting structure or on a wooden support member.

The present invention will be explained in more detail hereinafter with reference to two figures, in which connection it should be noted, however, that the present invention is by no means limited to such special figures.

Fig. 1 is a sectional view of a composite plate-shaped element according to a special embodiment of the present invention.

Fig. 2 is a sectional view of a composite plate-shaped element according to a special embodiment of the present invention.

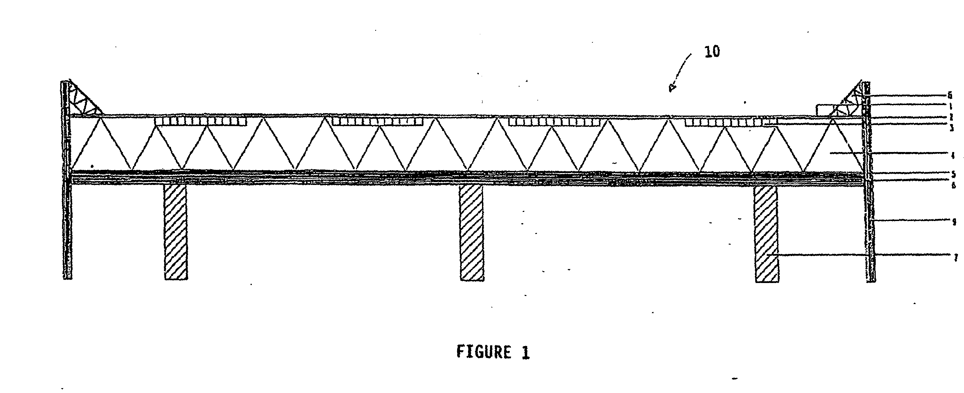

In the appended Fig. 1, the present composite plate-shaped element is indicated at 10 in front elevation. At the bottom side , the rigid base layer 6 is provided with structural ribs 7, which structural ribs 7 extend in the longitudinal direction of the element 10. At the upper side, the rigid base layer 6 is provided with a vapour-inhibiting layer 5, on which a layer of insulation material 4 is present. Present in said layer of insulation material 4 are one or more heat exchangers 3 for solar energy; for the sake of simplicity, the required supply and discharge lines have been left out, which supply and discharge lines do not require any further explanation for those skilled in the art. The heat exchangers 3 are arranged in the layer of insulation material 4 in such a manner that a substantially flat upper surface formed by the layer of insulation material 4 and the heat exchanger 3 that is flush-mounted therein is obtained. An under-layer 2, viz. a coating, may be provided on the upper surface thus obtained, which under-layer 2 is suitable for placing a layer of roofing material 1 thereon. If desired, the element 10 is provided with fascia boards 9 on one or on both short sides. In addition to that, one or more mastic corners 8 may be present on the layer of roofing material 1.

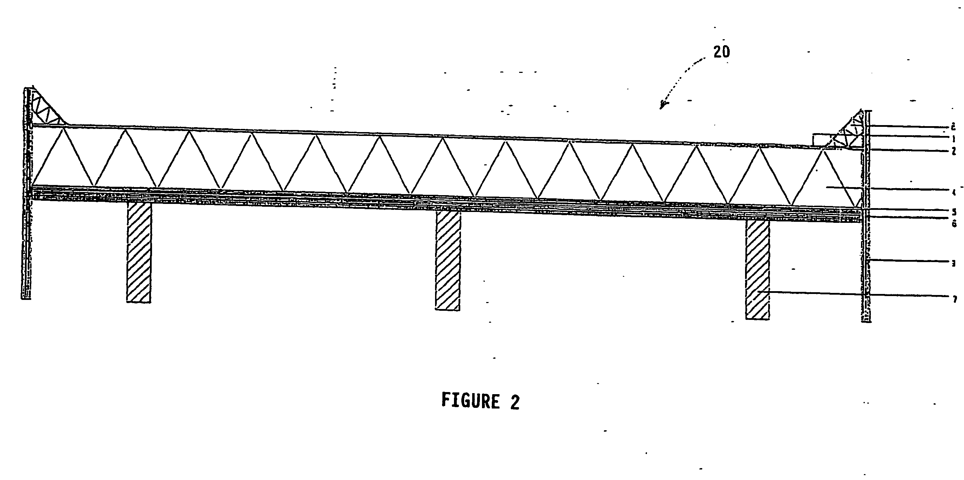

In Fig. 2, the present plate-shaped element 20 is schematically shown, with like parts being indicated by the same numerals as in Fig. 1. An important difference with Fig. 1 is the fact that no heat exchangers are provided. Such a construction is in particular advantageous with a view to keeping the manufacturing costs within bounds and maintaining the constructional specifications, for example as regards the thermal and acoustic insulating properties.

When an element having the above construction is used, in which in principle all the parts that are shown in the appended figure have already been realised at the works, a constant, reliable quality of the element itself as well as a significant saving in the construction costs at the building side is realised.

## Claims

1. A composite plate-shaped element comprising a rigid base (6) layer and a layer of insulation material (4) present thereon, wherein a vapour-inhibiting layer (5) is present between the rigid base layer (6) and the layer of insulation material (4), the base layer (6) being provided with one or more of structural ribs (7) on the side remote from the layer of insulation material (4), wherein
the structural 1 ribs (7) extend in the longitudinal direction of the composite plate-shaped element,
**characterized in that** one or more heat exchangers (3) for solar energy are present in the layer of insulation material (4), which heat exchangers (3) are provided with the required supply and discharge pipes, and said
heat exchangers (3) are flush-mounted in the layer of insulation material (4), in such a manner that a substantially flat upper surface formed by the layer of insulation material (4) and the heat exchangers (3) that are flush-mounted therein is obtained.

2. A composite plate-shaped element according to claim 1, **characterized in that** a layer of roofing material (1) is present on the layer of insulation material (4).

3. A composite plate-shaped element according to claim 2, **characterized in that** a coating (2) is provided between the layer of insulation material (4) and the layer of roofing material (1).

4. A composite plate-shaped element according to any one or more of the preceding claims, **characterized in that** the composite plate-shaped element is provided with fascia boards (9) on one or on both short sides.

5. A composite plate-shaped element according to any one or more of the claims 2-4, **characterized in that** one or more mastic corners (8) are provided on the layer of roofing material (1).

6. Use of a composite plate-shaped element as defined in any one or more of the preceding claims in a building.

7. Method for placing a composite plate-shaped element on a flat or a sloping roof, which method is **characterized by** the steps of:
i) providing a supporting structure, which structure comprises at least two spaced-apart load-bearing members, which load-bearing members are each provided with regularly spaced-apart recesses,
ii) providing a composite plate-shaped element as defined in any one or more of the preceding claims 1-5,
iii) placing said composite plate-shaped element on the load-bearing members, in such a manner that the structural ribs (7) of the composite plate-shaped element each engage in a recess, as a a result of which the composite plate-shaped element forms a covering between the two load-bearing members.

## Patentansprüche

1. In Verbundbauweise ausgeführtes, plattenförmiges Element mit einer starren Grundschicht (6) und einer darauf vorhandenen Schicht aus Isoliermaterial (4), wobei zwischen der starren Grundschicht (6) und der Schicht aus Isoliermaterial (4) eine Dampfsperrschicht (5) vorhanden ist, wobei die Grundschicht (6) auf der von der Schicht aus Isoliermaterial (4) abgelegenen Seite mit einer oder mehreren Strukturrippen (7) versehen ist, wobei
die Strukturrippen (7) in der Längsrichtung des in Verbundbauweise ausgeführten, plattenförmigen Elements verlaufen,
**dadurch gekennzeichnet, dass** in der Schicht aus Isoliermaterial (4) ein oder mehrere Wärmetauscher (3) für Solarenergie vorhanden sind, welche Wärmetauscher (3) mit den erforderlichen Zufluss- und Abflussrohren versehen sind, und die
Wärmetauscher (3) in die Schicht aus Isoliermaterial (4) bündig in solcher Art und Weise eingesetzt sind, dass eine im Wesentlichen flache Oberseite erhalten wird, die durch die Schicht aus Isoliermaterial (4) und die darin bündig eingesetzten Wärmetauscher (3) gebildet ist.

2. In Verbundbauweise ausgeführtes, plattenförmiges Element nach Anspruch 1, **dadurch gekennzeichnet, dass** auf der Schicht aus Isoliermaterial (4) eine Schicht aus Dachdeckungsmaterial (1) vorhanden ist.

3. In Verbundbauweise ausgeführtes, plattenförmiges Element nach Anspruch 2, **dadurch gekennzeichnet, dass** zwischen der Schicht aus Isoliermaterial (4) und der Schicht aus Dachdeckungsmaterial (1) eine Beschichtung (2) vorgesehen ist.

4. In Verbundbauweise ausgeführtes, plattenförmiges Element nach einem oder mehreren der vorhergehenden Ansprüche, **dadurch gekennzeichnet, dass** das in Verbundbausweise ausgeführte, plattenförmige Element an einer oder an beiden kurzen Seiten mit Verblendelementen (9) versehen ist.

5. In Verbundbauweise ausgeführtes, plattenförmiges Element nach einem oder mehreren der Ansprüche 2 bis 4, **dadurch gekennzeichnet, dass** auf der Schicht aus Dachdeckungsmaterial (1) ein oder mehrere Dichtmasse-Eckbereiche (8) vorgesehen ist bzw. sind.

6. Verwendung eines in Verbundbauweise ausgeführten, plattenförmigen Elements, wie es in einem oder mehreren der vorhergehenden Ansprüche definiert ist, in einem Gebäude.

7. Verfahren zum Anordnen eines in Verbundbauweise ausgeführten, plattenförmigen Elements auf einem Flachdach oder geneigten Dach, welches Verfahren durch folgende Schritte **gekennzeichnet** ist:
i) Bereitstellen einer Tragstruktur, welche Struktur mindestens zwei voneinander beabstandete Lastaufnahmeelemente aufweist, welche Lastaufnahmeelemente jeweils mit regelmäßig voneinander beabstandeten Aussparungen versehen sind,
ii) Bereitstellen eines in Verbundbauweise ausgeführten, plattenförmigen Elements, wie es in einem oder mehreren der vorhergehenden Ansprüche 1 bis 5 definiert ist,
iii) Anordnen des in Verbundbauweise ausgeführten, plattenförmigen Elements auf den Lastaufnahmeelementen in der Art und Weise, dass die Strukturrippen (7) des in Verbundbauweise ausgeführten, plattenförmigen Elements jeweils in eine Aussparung eingreifen, wodurch das in Verbundbauweise ausgeführte, plattenförmige Element eine Abdeckung zwischen den beiden Lastaufnahmeelementen bildet.

## Revendications

1. Élément composite en forme de plaque comprenant une couche de base rigide (6) et une couche de matériau d'isolation (4) présentes sur celui-ci, dans lequel une couche anti-vapeur (5) est présente entre la couche de base rigide (6) et la couche de matériau d'isolation (4), la couche de base (6) étant pourvue d'une ou de plusieurs nervures structurelles (7) sur le côté éloigné de la couche de matériau d'isolation (4), dans lequel les nervures structurelles (7) s'étendent dans la direction longitudinale de l'élément composite en forme de plaque, **caractérisé en ce qu'**un ou plusieurs échangeurs de chaleur (3) pour de l'énergie solaire sont présents dans la couche de matériau d'isolation (4), lesquels échangeurs de chaleur (3) sont pourvus des tuyaux nécessaires d'alimentation et d'évacuation, et lesdits échangeurs de chaleur (3) sont encastrés dans la couche de matériau d'isolation (4), de manière telle qu'une surface supérieure sensiblement plate formée par la couche de matériau d'isolation (4) et les échangeurs de chaleur (3) qui sont encastrés dans celle-ci soit obtenue.

2. Élément composite en forme de plaque selon la revendication 1, **caractérisé en ce qu'**une couche de matériau de couverture pour toiture (1) est présente sur la couche de matériau d'isolation (4).

3. Élément composite en forme de plaque selon la revendication 2, **caractérisé en ce qu'**un revêtement (2) est prévu entre la couche de matériau d'isolation (4) et la couche de matériau de couverture pour toiture (1).

4. Élément composite en forme de plaque selon une ou plusieurs quelconques des revendications précédentes, **caractérisé en ce que** l'élément composite en forme de plaque est pourvu de bordures de toit (9) sur un ou sur les deux côtés courts.

5. Élément composite en forme de plaque selon une ou plusieurs quelconques des revendications 2 à 4, **caractérisé en ce qu'**un ou plusieurs coins en mastic (8) sont prévus sur la couche de matériau de couverture pour toiture (1).

6. Utilisation d'un élément composite en forme de plaque selon une ou plusieurs quelconques des revendications précédentes dans un bâtiment.

7. Procédé pour positionner un élément composite en forme de plaque sur un toit plat ou en pente, lequel procédé est **caractérisé par** les étapes consistant à :
i) fournir une structure de support, laquelle structure comprend au moins deux éléments porteurs espacés, lesquels éléments porteurs sont chacun pourvus d'évidements espacés régulièrement,
ii) fournir un élément composite en forme de plaque selon une ou plusieurs quelconques des revendications précédentes 1 à 5,
iii) positionner ledit élément composite en forme de plaque sur les éléments porteurs, de manière telle que les nervures structurelles (7) de l'élément composite en forme de plaque s'engagent chacune dans un évidement, en conséquence de quoi l'élément composite en forme de plaque forme une couverture entre les deux éléments porteurs.
